Europäisches Patentamt

European Patent Office

Office européen des brevets

(19)

(11) Numéro de publication : **0 318 345 B1**

# (12) FASCICULE DE BREVET EUROPEEN

(45) Date de publication du fascicule du brevet :
**01.04.92 Bulletin 92/14**

(51) Int. Cl.⁵ : **F16H 35/10, B60J 7/057, E05F 15/16**

(21) Numéro de dépôt : **88402718.6**

(22) Date de dépôt : **27.10.88**

(54) **Dispositif motoréducteur d'entraînement d'une pièce à contrôle d'effort de sécurité.**

(30) Priorité : **23.11.87 FR 8716211**

(43) Date de publication de la demande :
**31.05.89 Bulletin 89/22**

(45) Mention de la délivrance du brevet :
**01.04.92 Bulletin 92/14**

(84) Etats contractants désignés :
**DE ES GB IT SE**

(56) Documents cités :
**EP-A- 0 144 527**
**EP-A- 0 154 155**
**US-A- 3 406 583**
**US-A- 4 503 713**

(73) Titulaire : **ROCKWELL AUTOMOTIVE BODY SYSTEMS-FRANCE EN ABREGE:ROCKWELL ABS-FRANCE**
**Tour Gan Cédex 13**
**F-92082 Paris La Defense 2 (FR)**

(72) Inventeur : **Periou, Pierre**
**15, Les Boccages Bruns**
**F-9500 Cergy Pontoise (FR)**

(74) Mandataire : **Martin, Jean-Paul et al**
**c/o CABINET LAVOIX 2, Place d'Estienne d'Orves**
**F-75441 Paris Cedex 09 (FR)**

EP 0 318 345 B1

## Description

La présente invention a pour objet un dispositif motoréducteur du type conforme au préambule de la revendication 1.

Le document US-A-4 503 713 décrit un dispositif capteur d'un couple apparaissant en fonctionnement entre un arbre d'entrée moteur et un arbre de sortie, l'arbre de sortie étant relié à l'arbre d'entrée par l'intermédiaire d'un accouplement élastique permettant des débattements angulaires entre les arbres d'entrée et de sortie par déformation de l'accouplement de telle sorte que la rotation de l'arbre de sortie est retardée par rapport à celle de l'arbre d'entrée.

Le document US-A-3 406 583 divulgue un système motoréducteur classique pour lève-vitre de véhicule, montrant les caractéristiques du préambule des revendications 1 et 5 et dans lequel l'arrivée en fin de course de l'accessoire entraîné provoque un bruit avertissant le conducteur qu'il doit arrêter le moteur.

De tels dispositifs sont susceptibles de recevoir de nombreuses applications, notamment sur les véhicules automobiles pour entraîner des ouvrants (lève-vitres, toits coulissants etc....) par commande impulsionnelle (c'est-à-dire sans pression constante du doigt sur l'interrupteur).

Celle-ci impose un contrôle de la position et de l'effort de transfert de l'ouvrant pendant toute la durée du transfert.

Plusieurs solutions sont connues pour détecter la position de l'ouvrant : on peut ainsi procéder par un comptage du nombre de tours de l'arbre d'entrée du motoréducteur, soit par coopération d'un balai avec une lame électriquement conductrice fixée à cet arbre d'induit, soit à l'aide d'une photo-diode et d'un photo-transistor associés à une roue crénelée fixée à l'arbre d'induit, soit aussi au moyen d'un aimant fixé en bout d'arbre et coopérant avec une bobine d'un circuit électrique.

Or, il n'existe pas de relation entre l'effort fourni et les paramètres moteur (variation de vitesse ou de courant) dans les régimes transitoires du fait de l'inertie des pièces en mouvement, ce qui constitue un inconvénient certain.

En effet, si la valeur critique détectée avant l'arrivée de l'ouvrant en butée est dûe par exemple à la présence d'un corps étranger tel que tête ou main d'un passager du véhicule, le retard de détection de cette situation anormale fait courir des risques de blessure à la personne à laquelle appartient ce corps étranger.

L'invention a donc pour but de réaliser un dispositif motoréducteur du type précité, qui permette de détecter une résistance anormale de l'ouvrant non affectée de la perte d'énergie cinétique et de donner au motoréducteur l'ordre d'arrêt, améliorant ainsi notablement la sécurité du dispositif.

Suivant l'invention, le dispositif motoréducteur est conforme à la partie caractérisante de la revendication 1, ou à la partie carctérisante de la revendication 5.

Un tel capteur de couple est adapté à une basse fréquence de contrôle, par exemple de quelques Herz. Dans d'autres cas, le casier des charges peut imposer une fréquence de contrôle du couple plus élevée, l'invention prévoyant alors des moyens pour diminuer la période du signal de mesure, comme décrit plus loin, en montant par exemple le capteur de couple sur un arbre à rotation rapide, tel que l'arbre d'induit du motoréducteur.

On notera également que le fait de placer le capteur en aval du moteur, permet d'intégrer dans le paramètre mesuré la surcharge dûe à l'inertie du moteur.

D'autres particularités et avantages de l'invention apparaitront au cours de, la description qui va suivre, faite en référence aux dessins annexés qui en illustrent plusieurs formes de réalisation à titres d'exemples non limitatifs :

– la Figure 1 est une vue en perspective du principe d'un capteur de couple exercé sur un élément élastique intercalé dans une ligne d'arbres;

– la Figure 2 est un diagramme représentant, en fonction du temps, le signal de tension électrique obtenu par le capteur de couple selon la Figure 1;

– la Figure 3 est une vue en élévation simplifiée d'un dispositif motoréducteur pourvu d'un capteur de couple selon une première forme de réalisation de l'invention;

– la Figure 4 est une vue en coupe axiale partielle d'une seconde forme de réalisation du dispositif motoréducteur selon l'invention;

– la Figure 5 est une vue en perspective, à échelle agrandie, d'une variante de réalisation du dispositif motoréducteur de la Figure 4;

– la Figure 6 est une vue en élévation partielle simplifiée d'une troisième forme de réalisation du dispositif motoréducteur selon l'invention.

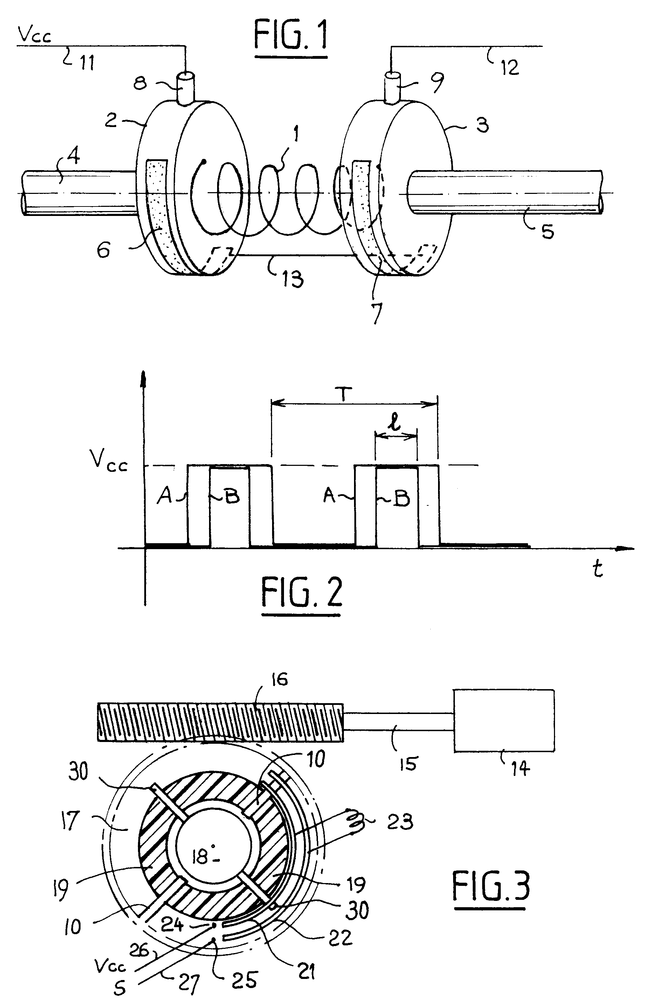

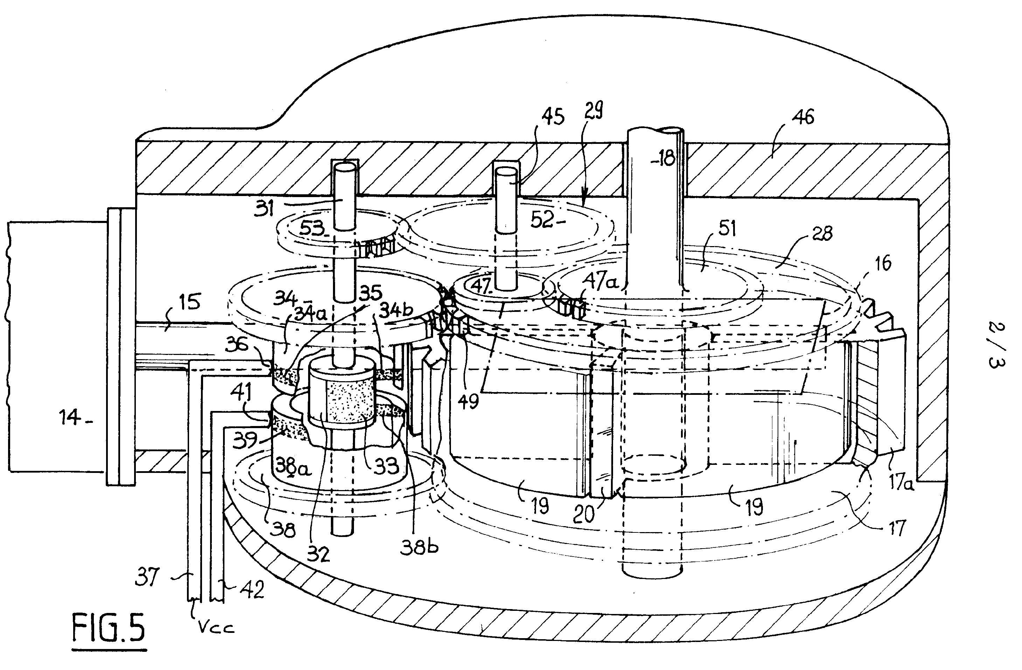

On voit à la Figure 1 le principe d'un capteur de couple par mesure de la déformation d'un élément élastique constitué par un ressort hélicoïdal 1 dont les extrémités sont fixées à deux flasques 2, 3, fixés respectivement aux extrémités d'un arbre d'entrée 4 et d'un arbre de sortie 5. Les flasques 2, 3 sont chacun revêtus d'une piste 6, 7 électriquement conductrice s'étendant sur une portion de circonférence du flasque support 2, 3, et associée à un contact électrique fixe 8, 9 relié à une connexion correspondante 11, 12 d'un circuit électrique de mesure. Les pistes 6, 7 sont reliées par une connexion 13.

Lorsque les arbres 4 et 5 tournent à vide, le ressort 1 d'accouplement n'est pas déformé, les balais ou plots 8, 9 établissent à chaque tour et en phase le contact électrique avec les pistes 6, 7 qui sont dans la même position angulaire. La tension électrique obtenue (Figure 2) $V_{cc}$ en fonction du temps t se présente sous la forme de créneaux successifs A.

Lorsque le dispositif est en charge, l'arbre 5, qui entraîne une pièce non représentée, est retardé angulairement par rapport à l'arbre moteur 4, le ressort 1 se déforme, la piste 7 se décale angulairement par rapport à la piste 6 d'un angle déterminé. De ce fait, les contacts 8, 9 sont en contact avec les pistes 6, 7, pour chaque tour d'arbre, pendant un temps inférieur au temps de fermeture de ces mêmes contacts lorsque le système fonctionne à vide. Il en résulte que les signaux B obtenus (Figure 2) ont une largeur inférieure à celles des signaux A. La largeur des signaux $V_{cc}$ diminue donc lorsque le décalage angulaire entre les deux arbres 4, 5 augmente, consécutivement à une résistance accrue exercé sur l'arbre 5, ce qui permet d'obtenir un signal électrique représentatif de la grandeur du couple exercé sur le ressort d'accouplement 1.

La Figure 3 illustre un premier mode de réalisation possible d'un dispositif motoréducteur pourvu d'un capteur de couple selon l'invention.

Ce dispositif comporte un moteur électrique 14 muni d'un arbre d'induit 15 terminé par une vis sans fin 16 accouplée à une roue de sortie 17 du réducteur, un arbre de sortie 18 solidarisé en rotation avec un organe de sortie d'amortisseur non représenté, et, de façon connue en soi, des blocs amortisseurs 19 interposés entre des ailettes radiales 10 solidaires de la roue 17 et des ailettes radiales 30 solidaires de l'organe de sortie d'amortisseur et de l'arbre de sortie 18.

Le capteur du couple exercé sur les blocs amortisseurs 19 comporte des pistes électriquement conductrices 21, 22 mécaniquement solidaires respectivement de l'arbre de sortie 18 et de la roue 17 du réducteur. Ces pistes sont reliées entre elles par une liaison électrique 23, et associées à des contacts fixes 24, 25 d'un circuit électrique dont on voit deux connexions respectives 26, 27.

Des signaux carrés du type de ceux de la Figure 2 sont émis par le circuit électrique de contrôle lorsque les interrupteurs 24, 21 et 25, 22 sont simultanément fermés sous l'action du couple exercé sur les blocs élastiques 19. Un tel capteur permet de mesurer le couple avec un fréquence de l'ordre de la fréquence de rotation de l'arbre de sortie 18 qui, dans le cas d'un ouvrant de véhicule est relativement basse (par exemple 1 Hz).

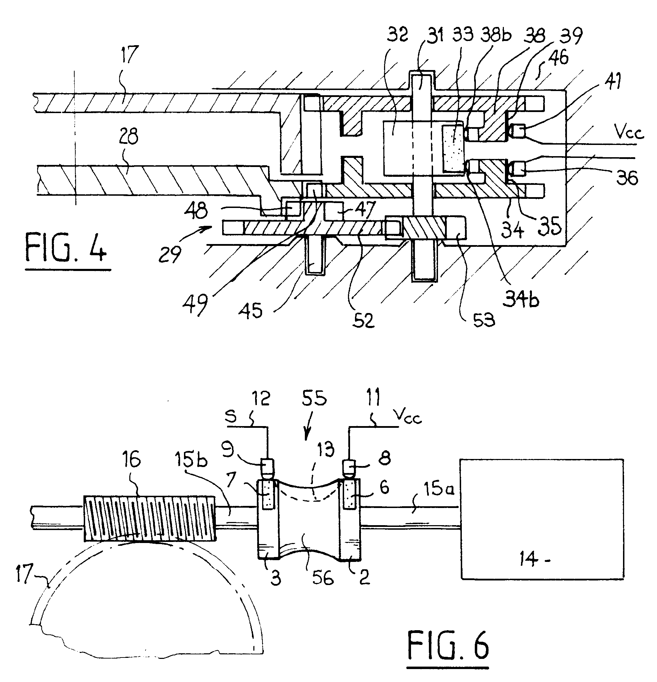

La seconde forme de réalisation du capteur de couple équipant le dispositif motoréducteur selon l'invention, illustrée aux Figures 4 et 5, permet d'augmenter considérablement la fréquence de contrôle du couple par rapport à la fréquence de la réalisation de la Figure 3, ce qui peut être nécessaire dans certains cas. En effet, dans les lève-glace de véhicule par exemple, la roue de sortie tourne à une vitesse relativement faible, d'environ 100 t/m, et la course de l'ouvrant est de l'ordre de 450 mm pour une montée complète, ce qui correspond, en fonction du rapport de réduction, à 4 à 10 tours de la roue de sortie. Un tour de la roue de sortie correspond donc par exemple à 90 mm de course de la vitre, de sorte qu'une mesure du couple à chaque tour de cette roue est tout à fait insuffisante, compte tenu du cahier des charges dans une application de ce type. Il faut donc augmenter la fréquence de comptage, et, pratiquement, exécuter un comptage à chaque millimètre de course de l'ouvrant, c'est-à-dire sensiblement à la vitesse de rotation de l'arbre d'induit, ce qui est possible avec le dispositif des Figures 4 et 5.

Celui-ci comprend, de manière connue en soi, le moteur 14, l'arbre d'induit 15 portant la vis sans fin 16 qui engrène avec les dents 17a de la roue de sortie 17 du réducteur, laquelle est munie de cloisons radiales 20. Les blocs amortisseurs élastiques 19 sont placés entre celles-ci et d'autres cloisons, non représentées, solidaires d'un organe de sortie d'amortisseur constitué par une roue 28 coaxiale à la roue 17 ainsi qu'à l'arbre de sortie 18 et solidaire de ce dernier.

Le capteur de couple comprend un système de pignons multiplicateurs et inverseurs 29 accouplés à l'organe de sortie 28 de l'amortisseur, comportant un arbre rotatif 31 parallèle à l'arbre de sortie 18, portant un collecteur 32 muni d'une lame 33 électriquement conductrice. Le système 29 comporte de plus une roue dentée 34 également accouplée à l'organe de sortie 28, coaxiale à l'arbre 31 et munie d'une piste conductrice 35 associée à un balai fixe 36 d'une connexion électrique 37.

Le capteur comprend par ailleurs une seconde roue dentée 38 coaxiale comme la roue 34 à l'arbre 31 et de même diamètre que la roue 34, accouplée à la roue de sortie 17 du réducteur et munie d'une piste circulaire 39 associée à un balai fixe 41 d'une connexion électrique 42, laquelle ainsi que la connexion 37 sont reliées à un circuit électrique non représenté. Les roues dentées 34 et 38 sont librement traversées par l'arbre 31 support du collecteur 32, les pistes circulaires 35, 39 étant placées sur des parties cylindriques 34a, 38a solidaires des roues respectives 34, 38 et coaxiales à celles-ci. Les pistes 35, 39 sont en contact périodique avec la lame 33, qui s'étend sur un secteur angulaire approprié du collecteur 32, par l'intermédiaire de contacts frottants respectifs 34b et 38b intérieurs aux roues 34 et 38.

Les extrémités de l'arbre 31 sont reçues dans la paroi d'un carter 46 qui contient l'ensemble des pièces précitées, sauf le moteur 14, et est traversé par l'arbre 18.

Le système de pignons 29 n'est pas réalisé de la même manière aux Figures 4 et 5, qui en constituent deux variantes possibles d'exécution.

Dans le dispositif de la Figure 4, le système de pignons comporte un petit pignon 47 qui engrène avec une denture 48 formée sur la roue 28 de sortie d'amortisseur, légèrement en retrait de la denture extérieure 49 de cette roue 28. Sur la Figure 5, le petit pignon 47 engrène avec une denture 47a d'une roue 51 coaxiale et solidaire de la roue de sortie 28, le diamètre de cette roue 51 étant tel que le petit pignon 47 peut prendre place entre sa denture 47a et la denture 49 de la roue 28.

Dans les deux systèmes multiplicateurs inverseurs, un grand pignon 52, solidaire d'un arbre 45 portant le petit pignon 47, engrène avec un troisième petit pignon 53 coaxial à l'arbre 31 et solidaire de celui-ci.

Le fonctionnement du dispositif motoréducteur et du capteur de couple des Figures 4 et 5 est le suivant :

La vis sans fin 16 entraînée par l'arbre d'entrée 15 entraîne en rotation la roue 17 et l'arbre de sortie 18, par l'intermédiaire des blocs 19 et de la roue 28 de sortie d'amortisseur. La roue 17 entraîne la roue 38 et son contact 38b frottant sur la lame 33, et la roue 28 entraîne la roue 34 ainsi que son contact 34b frottant également sur la lame 33. Les pignons 47 et 52 sont entraînés par la denture 48 (Figure 4) ou la denture 47a (Figure 5) en sens inverse de la roue 28, et le pignon 52 entraîne le pignon terminal 53, qui tourne donc dans le même sens que la roue 28, ainsi que le collecteur 32. Ce dernier tourne donc en sens inverse des roues dentées 34, 38 et de leurs pistes 35, 39, qui en effet tournent dans le sens opposé à celui des roues respectives d'entraînement 28 et 17. Le système de pignons 29 assure donc à la fois une multiplication et une inversion de la vitesse de rotation du collecteur 32 par rapport à la roue dentée 28, qui permet d'accroître la fréquence du comptage du couple au niveau des contacts 34b, 38b et de la lame conductrice 33, et ce en fonction du rapport de multiplication des pignons 47, 52 et 53.

Dans la troisième forme de réalisation de la Figure 6, le capteur de couple 55 est un accouplement élastique entre deux parties 15a, 15b de l'arbre moteur, la seconde partie 15b portant la vis sans fin 16. L'accouplement 55 comprend deux flasques 2, 3 rigidement liés aux parties terminales en vis-à-vis des sections d'arbre 15a et 15b, ainsi qu'un bloc élastique 56 dont les faces sont fixées aux faces en vis-à-vis des flasques 2, 3. Ces derniers portent une piste respective 6, 7 reliées par une connexion 13, s'étendant sur un secteur circulaire déterminé, et pouvant établir le contact avec un balai respectif fixe 8, 9 ainsi que des connexions correspondantes 11, 12 du circuit électrique de contrôle du couple.

Cette disposition est donc similaire à celle décrite dans son principe à la Figure 1. Ce mode de réalisation permet, comme celui des Figures 4 et 5, de contrôler le couple de déformation de l'accouplement 55 à une fréquence très élevée, puisque cette fréquence est celle de la rotation de l'arbre d'induit 15a. Pratiquement, on peut considérer qu'à un tour de l'arbre d'induit 15, 15a, correspond une course d'environ 1 mm de l'ouvrant, ce qui permet de mesurer le couple suffisamment souvent, et par conséquent de déclencher l'arrêt immédiat du moteur, si la présence d'un corps étranger s'oppose à la fermeture de l'ouvrant.

La Figure 2 montre les signaux carrés variables de la tension continue $V_{cc}$ pouvant également être obtenus avec le capteur de la Figure 6, de période T et de largeur 1.

D'une manière générale, pour les différents modes de réalisation du capteur de couple décrits ci-dessus, la période T permet à un circuit électronique approprié, connu en soi, comprenant un micro-processeur programmé de manière convenable, de déterminer la vitesse et la position de l'ouvrant. Le rapport 1/T permet de calculer le couple, le circuit électronique pouvant donner le cas échéant l'ordre d'arrêt immédiat au moteur 14 lorsqu'une valeur critique prédéterminée du couple est atteinte.

L'invention est susceptible de nombreuses applications, les ouvrants de véhicule automobile n'étant que des utilisations possibles fournies à titre d'exemples non limitatifs.

## Revendications

1. Dispositif motoréducteur comprenant un arbre d'entrée moteur (4, 15), un accouplement de arbre avec un arbre de sortie (5, 18), cet accouplement étant constitué d'une vis sans fin (16) et d'un réducteur entraîné par cette vis, ledit réducteur comprenant une roue de sortie (17) accouplée à la vis (16) ainsi qu'un amortisseur de couple (19) interposé entre la roue de sortie (17) et l'arbre de sortie (18), et un organe de sortie solidaire en rotation dudit arbre de sortie (18), caractérisé en ce qu'il comporte un capteur (19, 21, 22; 19, 29, 34, 35, 32; 55) d'un couple apparaissant en fonctionnement entre les arbres d'entrée (4, 15) et de sortie (5, 18) durant lequel la rotation de l'arbre de sortie est retardée par rapport à celle de l'arbre d'entrée et provoque une déformation de l'amortisseur (19), en ce que le capteur comporte des pistes électriquement conductrices (22, 21; 35, 39) reliées entre elles par une connexion électrique (23), associées à des contacts électriques fixes (24, 25; 36, 41) et fixées respectivement à la roue de sortie (17) du réducteur et à l'organe de sortie de l'amortisseur, et un circuit électrique incluant ces pistes électriquement conductrices, les connexions électriques et les contacts électriques fixes précités, pouvant émettre un signal périodique ($V_{cc}$) représentatif de la déformation de l'amortisseur, la fréquence de ce signal étant de l'ordre de la fréquence de rotation de l'arbre de sortie (18)

2. Dispositif selon la revendication 1, caractérisé en ce que le capteur comprend un système de pignons multiplicateurs et inverseurs (9) accouplé à l'organe de sortie (28) de l'amortisseur (19), comportant un arbre rotatif (31) portant un collecteur (32) pourvu d'une lame électriquement conductrice (33), une roue dentée (34) accouplée également à l'organe de sortie (28) de l'amortisseur, coaxiale à l'arbre (31) portant le collecteur (32) et munie d'une piste conductrice (35) reliée à la lame (33) par l'intermédiaire d'un contact frottant 34b, et associée à une connexion (36, 37), et une roue dentée (38) accouplée à la roue de sortie (17) du réducteur, coaxiale à l'arbre (31) portant le collecteur (33), munie d'une piste (39) conductrice reliée à la lame (33) par l'intermédiaire d'un contact frottant 38b, et associée à une seconde connexion (41, 42) d'un circuit électronique de calcul et de contrôle du couple, pouvant émettre un signal ($V_{cc}$) périodique représentatif d'une déformation de l'amortisseur et du déphasage corrélatif entre les vitesses de rotation des deux roues dentées (34, 38).

3. Dispositif selon la revendication 2, caractérisé en ce que les deux roues dentées (34, 38) sont librement traversées par l'arbre (32) portant le collecteur (32) et ont le même diamètre.

4. Dispositif selon les revendications 2 et 3, caractérisé en ce que le système de pignons (29) comporte un petit pignon (47) et un grand pignon (52) solidaires d'un même arbre (45), le petit pignon (47) engrenant avec une roue dentée (48, 51) faisant partie de l'organe de sortie (28) de l'amortisseur (19), et un troisième petit pignon (53) engrenant avec le grand pignon (52) et solidaire en rotation de l'arbre (31) portant le collecteur (32), de telle sorte que ce dernier tourne dans le même sens que la roue de sortie (17) du réducteur et l'organe de sortie (28) de l'amortisseur et en sens inverse des deux roues (34,38) entraînées par ces deux roues de sortie (28, 17).

5. Dispositif motoréducteur comprenant un arbre d'entrée moteur (4, 15), un accouplement de cet arbre avec un arbre de sortie (5, 18), cet accouplement étant constitué d'une vis sans fin (16) et d'un réducteur entraîné par cette vis, ledit réducteur comprenant une roue de sortie (17) accouplée à la vis (16), caractérisé en ce qu'il comporte un capteur d'un couple apparaissant en fonctionnement entre les arbres d'entrée (15a) et de sortie, en ce que le capteur de couple est constitué par un accouplement élastique (55) entre deux parties (15a, 15b) de l'arbre moteur d'entrée, et cet accouplement comprend deux extrémités (2, 3) rigidement liées aux deux parties terminales (15a, 15b) en vis-à-vis de l'arbred'entrée, ainsi qu'entre elles par un bloc élastique (56), et ces deux extrémités portent chacune une piste électrique (6, 7) reliées entre elles et associées à un balai fixe (8, 9) et à une connexion respectifs (11, 12) d'un circuit électronique apte à déterminer un signal périodique ($V_{cc}$) représentatif d'un couple de déformation en torsion du bloc élastique (56) et à calculer ce couple.

6. Utilisation du dispositif selon l'une des revendications 1 à 5 pour l'entraînement par son arbre de sortie (18) d'ouvrants de véhicules automobiles tels que lève-glace et toit coulissant.

## Patentansprüche

1. Getriebemotorvorrichtung mit einer Eingangsantriebswelle (4, 15), einer Kupplung dieser Welle mit einer Ausgangswelle (5, 18), wobei die Kupplung durch eine Schnecke (16) und ein von der Schnecke angetriebenes Untersetzungsgetriebe gebildet ist, wobei das Untersetzungsgetriebe ein Ausgangsrad (17), das mit der Schnecke (16) gekuppelt ist, sowie einen Momentdämpfer (19), der zwischen dem Ausgangrad (17) und der Ausgangswelle (18) angeordnet ist, aufweist, und mit einem mit der Ausgangswelle (18) drehfest verbundenen Ausgangselement, dadurch gekennzeichnet, daß sie einen Geber (19, 21, 22; 19, 29, 34, 35, 32; 55) für ein beim Betrieb zwischen der Eingangwelle (4, 15) und der Ausgangswelle (5, 18) auftretendes Drehmoment aufweist, während welchem die Drehung der Eingangswelle bezüglich derjenigen der Ausgangswelle versögert ist und eine Verformung des Dämpfers (19) bewirkt, daß der Geber elektrisch leitende Bahnen (22, 21; 35, 39), die miteinander durch eine elektrische Verbindung (23) verbunden sind, feststehenden elektrischen Kontakten (24, 25; 36, 41) zugeordnet sind, und die am Ausgangsrad (17) des Untersetzungsgetriebes bzw. am Ausgangselement des Dämpfers angebracht sind, sowie ferner eine elektrische Schaltung, die diese elektrisch leitenden Bahnen, die elektrischen Verbindungen und die feststehenden elektrischen Kontakte enthält und ein periodisches Signal ($V_{cc}$) abgeben kann, welches für die Verformung des Dämpfers repräsentativ ist, wobei die Frequenz des Signals von der Größenordnung der Umlauffrequenz des Ausgangswelle (18) ist, aufweist.

2. Vorrichtung nach Anspruch 1, dadurch gekennzeichnet, daß der Geber ein System von mit dem Ausgangselement (28) des Dämpfers (19) gekuppelten Übersetzungs- und Umkehrritzeln (29) umfaßt, das eine Drehwelle (31), die einen mit einem elektrisch leitenden Blättchen (33) versehenen Kollektor (32) trägt, ein auch mit dem Ausgangselement (28) des Dämpfers verbundenes Zahnrad (34), welches koaxial mit der den Kollektor (32) tragenden Welle (31) ist und mit einer leitenden Bahn (35), die mit dem Blättchen (33) über einen Gleitkontakt (34b) verbunden und einem Anschluß (36, 37) zugeordnet ist, und ein Zahnrad (38), das mit Ausgangsrad (17) des Untersetzungsgetriebes gekuppelt ist, koaxial mit der den Kollektor (32) tragenden Welle (31) ist, mit einer mit dem Blättchen (33) über einen Gleitkontakt (38b) verbundenen leitenden Bahn (39) versehen und einem zweiten Anschluß (41, 42) einem elektronischen Rechen- und Momentüberwachungsschaltkreis zugeordnet ist, welcher ein periodisches Signal

($V_{cc}$) abgeben kann, das repräsentativ für eine Verformung des Dämpfers und für die korrelative Phasenverschiebung zwischen den Drehgeschwindigkeiten der beiden Zahnräder (34, 38) ist, aufweist.

3. Vorrichtung nach Anspruch 2, dadurch gekennzeichnet, daß die beiden Zahnräder (34, 38) von der den Kollektor (32) tragenden Welle (32) frei durchsetzt sind und den gleichen Durchmesser haben.

4. Vorrichtung nach den Ansprüchen 2 und 3, dadurch gekennzeichnet, daß das system von Ritzeln (29) ein kleines Ritzel (47) und ein großes Ritzel (52), die beide mit einer gleichen Welle (45) fest verbunden sind, wobei das Kleine Ritzel (47) mit einem Zahnrad (48, 51), das einen Teil des Ausgangselements (28) des Dämpfers (19) bildet, kämmt, und ein drittes kleines Ritzel (53) umfaßt, das mit dem großen Ritzel (52) kämmt und drehfest mit der den Kollektor (32) tragenden Welle (31) verbunden ist, derart, daß letztere gleichsinnig wie das Ausgangsrad (17) des Untersetzungsgetriebes und das Ausgangselement (28) des Dämpfers und im gegengesetzten Sinne zu den beiden Rädern (34, 38), die durch die beiden Ausgangsräder (28, 17) angetrieben werden, dreht.

5. Getriebemotorvorrichtung mit einer Eingangsantriebswelle (4, 15), einer Kupplung dieser Welle mit einer Ausgangswelle (5, 18), wobei die Kupplung durch eine Schnecke (16) und ein von dieser Schnecke angetriebenes Untersetzungsgetriebe gebildet ist, wobei das Untersetzungsgetriebe ein mit der Schnecke (16) gekuppeltes Ausgangsrad (17) umfaßt, dadurch gekennzeichnet, daß sie einen Geber für ein Drehmoment, das im Betrieb zwischen der Eingangswelle (15a) und der Ausgangswelle auftritt, aufweist, daß der Drehmomentgeber durch eine elastische Kupplung (55) zwischen zwei Teilen (15a, 15b) der Eingangsantriebswelle gebildet ist, wobei diese Kupplung zwei Enden (2, 3) aufweist, die gegenüberliegend starr mit zwei Endabschnitten (15a, 15b) der Eingangswelle sowie miteinander durch einen elastichen Block (56) verbunden sind, wobei diese beiden Enden jeweils eine elektrische Bahn (6, 7) tragen, die miteinander verbunden sind, und jeweils einem feststehenden Schliefkontakt (8, 9) und einem Anschluß (11, 12) an eine elektronische Schaltung zugeordnet sind, die geeignet ist, ein periodisches Signal ($V_{cc}$), das für das Verformungsmoment bei einer Torsion des elastischen Blockes (56) repräsentativ ist, zu bestimmen und dieses Moment zu berechnen.

6. Verwendung der Vorrichtung nach einem der ansprüche 1 bis 5 zum Antreiben von öffnenden Teilen von Automobilen, wie Scheibenheber oder Schiebedach, über ihre Ausgangswelle (18).

## Claims

1. Speed-reducer device comprising an input drive shaft (4, 15), a coupling of this shaft to an output shaft (5, 18), this coupling being constituted by a worm (16) and a reducer driven by this worm, said reducer comprising an output wheel (17) coupled to the worm (16) as well as a torque absorber (19) interposed between the output wheel (17) and the output shaft (18), and an output member connected to rotate with said output shaft (18), characterised in that it comprises a sensor (19, 21, 22; 19, 29, 34, 35, 32; 55) for a torque occurring during operation between the input shaft (4, 15) and output shaft (5, 18), during which the rotation of the output shaft is retarded with respect to that of the input shaft and causes a deformation of the damper (19), in that the sensor comprises electrically conducting tracks (22, 21; 35, 39) connected to each other by an electrical connection (23), associated with fixed electrical contacts (24, 25; 36, 41) and fixed respectively to the output wheel (17) of the reducer and to the output member of the damper, and an electrical circuit including these electrically conducting tracks, the said electrical connections and fixed electrical contacts being able to emit a periodic signal ($V_{cc}$) representative of the deformation of the damper, the frequency of this signal being of the order of the frequency of rotation of the output shaft (18).

2. Device according to Claim 1, characterised in that the sensor comprises a system of multiplier pinions and reversers (29) connected to the output member (28) of the damper (19), comprising a rotary shaft (31) supporting a collector (32) provided with an electrically conducting plate (33), a toothed wheel (34) also connected to the output member (28) of the damper, coaxial with the shaft (31) supporting the collector (32) and provided with a conducting track (35) connected to the plate (33) through the intermediary of a rubbing contact (34b), and associated with a connection (36, 37), and a toothed wheel (38) connected to the output wheel (17) of the reducer, coaxial with the shaft (31) supporting the collector (32), provided with a conducting track (39) connected to the plate (33) through the intermediary of a rubbing contact (38b), and associated with a second connection (41, 42) of an electronic calculation and torque-control circuit, being able to emit a periodic signal ($V_{cc}$) representative of a deformation of the damper and of the correlative phase displacement between the speeds of rotation of the two toothed wheels (34, 38).

3. Device according to Claim 2, characterised in that passing freely through the two toothed wheels (34, 38) is the shaft (32) supporting the collector (32) and the two toothed wheels have the same diameter.

4. Device according to Claims 2 and 3, characterised in that the system of pinions (29) comprises a small pinion (47) and a large pinion (52) integral with the same shaft (45), the small pinion (47) meshing with a toothed wheel (48, 51) forming part of the output member (28) of the damper (19), and a third small pinion (53) meshing with the large pinion (52) and connected to rotate with the shaft (31) supporting the collector (32), in such a way that the latter rotates in the same direction as the output wheel (17) of the reducer and the output member (28) of the damper and in the opposite direction to the two wheels (34, 38) driven by these two output wheels (28, 17).

5. Speed-reducer device comprising an input drive shaft (4, 15), a coupling of this shaft to an output shaft (5, 18), this coupling being constituted by a worm (16) and by a reducer driven by this worm, said reducer comprising an output wheel (17) connected to the worm (16), characterised in that it comprises a sensor for a torque occurring during operation between the input shaft (15a) and output shaft, in that the torque sensor is constituted by a resilient coupling (55) between two parts (15a, 15b) of the input drive shaft and this coupling comprises two ends (2, 3) rigidly connected to the two facing terminal parts (15a, 15b) of the input shaft, as well as to each other by a resilient unit (56), and these two ends each support an electrical track (6, 7) connected to each other and associated with a respective fixed brush (8, 9) and a connection (11, 12) of an electronic circuit able to determine a periodic signal ($V_{cc}$) representative of a torque of twisting deformation of the resilient unit (56) and able to calculate this torque.

6. Use of the device according to one of Claims 1 to 5 for the drive by its output shaft (18) of motor vehicle opening mechanisms such as a window winder and sliding roof.

# FIG.1

$V_{cc}$

11

8

2

4

1

9

12

3

6

13

7

5

# FIG.2

$V_{cc}$

T

$\ell$

A

B

A

B

t

# FIG.3

16

10

30

17

19

19

10

23

18

30

22

24

26

$V_{cc}$

5

27

21

25

FIG.5

EP 0 318 345 B1

FIG. 4

FIG. 6